# EUROPÄISCHE PATENTSCHRIFT

(11) **EP 1 970 250 B1**
(45) Veröffentlichungstag und Bekanntmachung des Hinweises auf die Patenterteilung: **20.07.2011**
(21) Anmeldenummer: 08003885.4
(22) Anmeldetag: 03.03.2008
(51) Int. Cl.: B60Q 1/26, F21S 8/10, F21V 7/00

(54) **Leuchte für Fahrzeuge, insbesondere für Kraftfahrzeuge**
Lamp for vehicles, in particular motor vehicles
Eclairage pour véhicules, en particulier pour véhicules automobiles

(30) Priorität: 12.03.2007 DE 102007012256
(43) Veröffentlichungstag der Anmeldung: 17.09.2008
(73) Patentinhaber: Odelo GmbH, 71409 Schwaikheim (DE)
(72) Erfinder: Mertens, Jens, 73734 Esslingen (DE); Esser, Gerhard, 73779 Deizisau (DE); Vlastnik, Andreas, 71640 Ludwigsburg (DE); Bottesch, Rainer, 73733 Esslingen (DE)
(74) Vertreter: Meyer, Thorsten

(56) Entgegenhaltungen:
- EP-A- 1 126 209
- EP-A- 1 213 531
- EP-A- 1 464 888
- DE-A1- 10 019 557
- FR-A- 2 831 647
- JP-A- 11 306 810
- US-B1- 6 414 801

## Beschreibung

Die Erfindung betrifft eine Leuchte für Fahrzeuge, insbesondere für Kraftfahrzeuge, nach dem Oberbegriff des Anspruches 1.

Es sind Leuchten, beispielsweise in Form von Heckleuchten, bekannt, die Leuchtfelder in Form des Blinklichts, des Bremslichtes, des Schlusslichtes und des Rückfahrlichtes aufweisen. Eine homogene Ausleuchtung ist nur schwierig bzw. mit großem Aufwand zu erreichen.

Durch US 6,414,801 ist eine Leuchte für Fahrzeuge bekannt. Die Leuchte umfasst ein Leuchtengehäuse, das wenigstens ein Leuchtfeld, dem wenigstens ein Reflektor mit mindestens einem Leuchtmittel zugeordnet ist, sowie eine Lichtscheibe aufweist, die das Leuchtengehäuse schließt. Der Reflektor reflektiert das vom Leuchtmittel emittierte Licht in einen weiteren Reflektor. Ein weiteres Leuchtmittel sitzt vor dem Reflektor in dem Leuchtengehäuse und strahlt sein Licht direkt zur Lichtscheibe sowie ggf. über den weiteren Reflektor, in den auch der Reflektor das Licht der Lichtquelle einstrahlt, zur Lichtscheibe. Dadurch geben beide Lichtquellen ihr Licht über den weiteren Reflektor ab.

Durch die DE 100 19 557 A1, die EP 1 464 888 A1. die JP 11306810 A, die EP 1 213 531 A1 und die EP 1 126 209 A1 sind Leuchten für Fahrzeuge bekannt, welche jeweils ein Leuchtengehäuse umfassen, das wenigstens ein Leuchtfeld, dem wenigstens ein Reflektor mit mindestens einem Leuchtmittel zugeordnet ist aufweist. Die Leuchten weisen jeweils eine Lichtscheibe auf, die das Leuchtengehäuse schließt. An der von der Lichtscheibe abgewandten Seite des Reflektors ist wenigstens ein weiterer Reflektor vorgesehen, der Licht wenigstens eines weiteren Leuchtmittels am anderen Reflektor vorbei zur Lichtscheibe reflektiert.

Durch die FR 2 831 647 A ist eine Leuchte für Kraftfahrzeuge mit einem in die Lichtscheibe integrierten Lichtleiter bekannt.

Der Erfindung liegt die Aufgabe zugrunde, die gattungsgemäße Leuchte so auszubilden, dass bei einfacher konstruktiver Gestaltung und einfacher Herstellung sowie Montage eine möglichst gleichmäßige homogene Ausleuchtung gewährleistet ist.

Diese Aufgabe wird bei der gattungsgemäßen Leuchte erfindungsgemäß mit den kennzeichnenden Merkmalen des Anspruches 1 gelöst.

Bei der erfindungsgemäßen Leuchte sorgt der weitere Reflektor mit dem weiteren Leuchtmittel dadurch, dass die reflektierten Strahlen an den für die Leuchtfelder zuständigen Reflektoren und Leuchtmittel vorbeigeleitet wird. Dieses zusätzliche Licht ermöglicht eine homogene Ausleuchtung, ohne dass hierzu ein großer technischer Aufwand erforderlich ist.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in Ansicht eine erfindungsgemäße Leuchte mit einem äußeren und einem inneren Leuchtenteil,
- Fig. 2: in schematischer Darstellung einen Schnitt durch den äußeren Leuchtenteil der erfindungsgemäßen Leuchte gemäß Fig. 1,
- Fig. 3: durch stabförmige Lichtleiter gebildete Lichtleisten der erfindungsgemäßen Leuchte gemäß Fig. 1,
- Fig. 4: in einer Darstellung entsprechend Fig. 2 eine zweite Ausführungsform einer erfindungsgemäßen Leuchte.

Die Leuchte 1 hat einen äußeren Leuchtenteil 2 und einen inneren Leuchtenteil 3. Ist die Leuchte 1 eine Heckleuchte eines Kraftfahrzeuges, dann befindet sich der äußere Leuchtenteil 2 in der Regel im rückseitigen Bereich des Kotflügels des Kraftfahrzeuges, während der innere Leuchtenteil 3 beispielsweise Teil des Kofferraumdeckels des Kraftfahrzeuges ist. Ist der Kofferraumdeckel oder auch die Heckklappe eines Kraftfahrzeuges geschlossen, dann befindet sich zwischen den beiden Leuchtenteilen 2, 3 eine Trennfuge 4, die beispielsweise deckungsgleich mit der Trennung zwischen dem Kotflügel und dem Kofferraumdeckel bzw. der Heckklappe ist. Die dargestellte geteilte Leuchte 1 ist nur beispielhaft zu verstehen. Die Leuchte kann auch einteilig ausgebildet sein.

Die Leuchte 1 hat ein Gehäuse 6 für den äußeren Leuchtenteil 2 und den inneren Leuchtenteil 3. Der innere Leuchtenteil 3 hat beispielhaft eine kleinere Sichtfläche als der äußere Leuchtenteil 2. Beide Leuchtenteile können selbstverständlich auch gleich große Sichtflächen haben. Auch kann der äußere Leuchtenteil 2 eine kleinere Sichtfläche aufweisen als der innere Leuchtenteil 3. Die Umrissformen der Leuchtenteile 2, 3 richtet sich nach dem Einsatzfall der Leuchte 1. Abweichend von der dargestellten etwa rechteckigen Umrissform können die Leuchtenteile 2, 3 auch andere Umrissformen haben.

Beide Leuchtenteile 2, 3 haben eine Lichtscheibe 10, die als Leuchtenhintergrund dient. Die Lichtscheibe 10 des äußeren Leuchtenteiles 2 füllt nahezu die gesamte Sichtseite dieses Leuchtenteiles aus. Die Lichtscheibe 10 des Leuchtenteiles 3 ist im Vergleich zur Sichtseite dieses Leuchtenteiles wesentlich kleiner. Die Lichtscheibe 10 des äußeren Lichtteiles 2 wird von einem etwa gleich breiten Rand 5 des Leuchtengehäuses 6 umgeben. Der das Leuchtenfeld 10 des inneren Leuchtenteiles 3 umgebende Rand 5 ist auf dem vorn äußeren Leuchtenteil 2 abgewandten Bereich breiter als im übrigen Randbereich. Je nach Gestaltung des inneren Leuchtenteiles 3 kann selbstverständlich die Lichtscheibe 10 auch von einem etwa gleich breiten Rand umgeben sein. Die Lichtscheiben 10 bilden vorteilhaft eine homogen geschlossene beleuchtete Fläche, wenn das dahinter befindliche Leuchtmittel eingeschaltet ist.

In der Lichtscheibe 10 des äußeren Leuchtenteiles 2 sind sechs Leuchtfelder 11, 12, 13, 14, 15, 16 vorgesehen. Die Leuchtfelder 11, 15 und 12, 16 liegen mit Abstand nebeneinander und übereinander. Die Leuchtfelder 15, 16 haben Rechteckform und erstrecken sich jeweils in Längsrichtung des Leuchtenteiles 2. Das mit Abstand neben dem Leuchtfeld 15 liegende Leuchtfeld 11 hat trapezförmigen Umriss, während das neben dem Leuchtfeld 16 liegende Leuchtfeld 12 rechteckigen Umriss hat. Zwischen den Leuchtfeldern 11, 15; 12, 16 liegen die übereinander angeordneten, vorteilhaft gleich großen Leuchtfelder 13, 14, die sich etwa über die Gesamtbreite der mit Abstand oberhalb und unterhalb von ihnen befindlichen Leuchtfeldern erstrecken. Diese Ausbildung der Leuchtfelder ist nur beispielhaft zu verstehen. Die Leuchtfelder können je nach Ausbildung der Leuchte 1 und/oder dem vorgesehenen Anwendungsfall unterschiedlichste Formen haben.

Die Lichtscheibe 10 des inneren Leuchtenteiles 3 ist mit zwei übereinander angeordneten, vorteilhaft gleich großen Leuchtfeldern 17, 22 versehen, die rechteckförmigen Umriss haben und beispielhaft gleich groß sind wie die Leuchtenfelder 15, 16 des äußeren Leuchtenteiles 2. Zwischen diesen Leuchtfeldern liegen mit Abstand zwei weitere Leuchtfelder 28, 29, die fluchtend zu den Leuchtfeldern 13, 14 liegen und breiter als die Leuchtfelder 17, 22 sind. Auch für die Leuchtfelder 17, 22, 28, 29 gilt, dass sie selbstverständlich jede andere Umrissform haben können.

Im Bereich hinter den Leuchtfeldern 13, 14 sind zwei parallel zueinander liegende Lichtleiter 19, 21 vorgesehen, die geringen Abstand voneinander haben und sich nahezu über die ganze Länge dieser Leuchtfelder 13, 24 erstrecken.

Im Bereich hinter den Leuchtfeldern 28, 29 des inneren Leuchtenteiles 3 befinden sich ebenfalls zwei mit Abstand übereinander liegende Lichtleiter 20, 26. Sie erstrecken sich über die Länge der Leuchtfelder 28, 29 und haben geringen Abstand voneinander.

Hinter den Lichtscheiben 10 sind im Bereich unterhalb der unteren Leuchtfelder 12, 16 und 22 beispielhaft Rückstrahler 23 vorgesehen, die von außen auftreffendes Licht vollständig reflektieren. Auch die von den anderen Leuchtfeldern 11, 12, 15, 16, 17, 22 nicht abgedeckten Bereiche der Lichtscheiben 10 können mit solchen Rückstrahlern ausgerüstet sein.

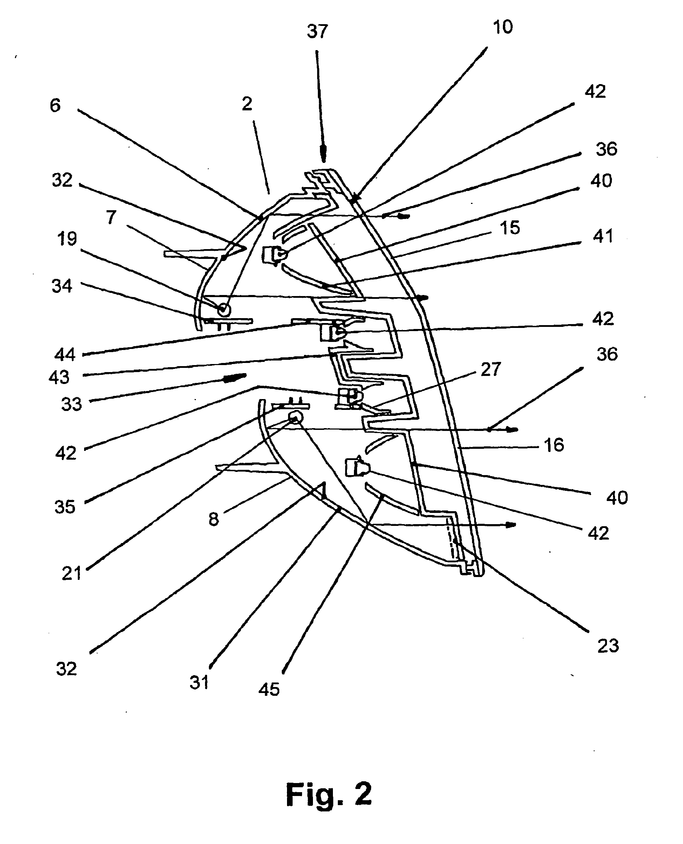

Ist die Leuchte 1 eine Heckleuchte, dann kommt den Leuchtfeldern jeweils eine unterschiedliche Signalfunktion zu. So können diese Leuchtfelder beispielsweise ein Bremslicht, ein Blinklicht, ein Rücklicht und ein Nebelschlusslicht sein, wobei die Anordnung dieser verschiedenen Lichter sich nach der Art der Leuchte und nach den gesetzlichen Vorschriften richtet. Die Leuchtfelder 11 bis 17, 22, 28, 29 werden durch jeweils wenigstens ein Leuchtmittel beleuchtet. Zur Ausleuchtung der die Leuchtfelder umgebenden Bereiche der Lichtscheibe 10 werden die Lichtleiter 19, 21; 20, 26 herangezogen, die indirekt über Reflektoren ihr Licht auf diese Bereiche abgeben. Wie Fig. 2 zeigt, befinden sich hinter der Lichtscheibe 10 des äußeren Leuchtenteiles 2 in Höhe der Leuchtfelder 15, 16 Reflektoren 41, 45, die sich hinter einer inneren Lichtscheibe 40 befinden. Sie ist mit ihrem Rand an der Innenseite des Leuchtengehäuses 6 befestigt, beispielsweise angeklebt oder angeschweißt. Im Brennpunkt der Reflektoren 41, 45 befindet sich jeweils mindestens ein Leuchtmittel 42, das vorteilhaft eine LED ist. Das vorn Leuchtmittel abgestrahlte Licht wird durch die Reflektoren 41, 45 zur inneren Lichtscheibe 40 reflektiert. Von dort gelangt das Licht zur äußeren Lichtscheibe 10, durch die das Licht aus der Leuchte 1 nach außen tritt. Die innere Lichtscheibe 40 und/oder die äußere Lichtscheibe 10 können Optiken aufweisen, mit denen das Licht in gewünschter Weise gelenkt werden kann.

Auch im Bereich der mittleren Leuchtfelder 13, 14 ist jeweils wenigstens ein Reflektor 43, 27 vorgesehen, in dessen Brennpunkt jeweils mindestens ein Leuchtmittel 42, vorzugsweise eine LED, angeordnet ist. Der Reflektor 27, 44 reflektiert das vorn zugehörigen Leuchtmittel 42 abgestrahlte Licht durch die innere Lichtscheibe 40 in Richtung auf die äußere Lichtscheibe 10, durch die das Licht aus der Leuchte 1 nach außen tritt. Die innere Lichtscheibe 40 ist im Bereich der Reflektoren 27, 44 im Querschnitt jeweils etwa U-förmig gestaltet. Die Reflektoren 27, 41, 43, 45 liegen jeweils mit Abstand voneinander. Die beiden mittleren Reflektoren 27, 43 haben einen kleineren Öffnungswinkel als die beiden äußeren Reflektoren 41 und 45, da die ihnen zugeordneten Abschnitte der inneren Lichtscheibe 40 kleiner sind als die den mittleren Reflektoren 27, 43 zugeordneten Lichtscheibenabschnitte. Die innere Lichtscheibe 40 liegt der äußeren Lichtscheibe 10 mit Abstand gegenüber.

Auf der von der Lichtscheibe 10 abgewandten Seite der Reflektoren 27, 41, 43, 45 innerhalb des Gehäuses 6 befinden sich in Höhe der Leuchtfelder 13, 14 die stabförmigen Lichtleiter 19, 21. Sie erstrecken sich von dem dem inneren Leuchtenteil 3 benachbarten Rand der Leuchtfelder 13, 14 bis zum gegenüberliegenden Rand des Leuchtfeldes 24. An diesem Ende wird in die stabförmigen Lichtleiter 19, 21 mittels jeweils eines Leuchtmittels 18 Licht eingekoppelt. Das Leuchtmittel 18 ist eine LED, die auf einer Platine 34, 35 sitzt. Die Lichteinspeisung in die Lichtleiter 19, 21 kann auch über mehr als ein Leuchtmittel 18 eingekoppelt werden, das vorteilhaft eine LED ist. Auch am gegenüberliegenden Ende kann in die Lichtleiter 19, 21 mittels wenigstens eines Leuchtmittels 18, vorzugsweise einer LED, Licht eingekoppelt werden. Die Einkoppelung des Lichtes in die Lichtleiter 19, 21 kann in bekannter Weise erfolgen, beispielsweise indem die LED 18 an einer Einkoppelfläche am Ende des Lichtleiters anliegt.

Mittels der Lichtleiter 19, 21 wird der die Leuchtfelder 11, 12, 13, 14, 15, 16 umgebende Bereich mit Hintergrundbeleuchtung versorgt. Erreicht wird dies dadurch, dass den Lichtleitern 19, 21 jeweils ein Reflektor 7, 8 zugeordnet ist. Er wird vorteilhaft durch einen Teil der Innenseite des Leuchtengehäuses 2 gebildet. Diese Innenseitenbereiche können mit einer reflektierenden Beschichtung 32 versehen sein. Die Reflektoren 7, 8 und die Lichtleiter 19, 21 sind so angeordnet, dass das aus dem jeweiligen Lichtleiter ausgekoppelte Licht an den Reflektoren 7, 8 in Richtung auf die äußere Lichtscheibe 10 reflektiert wird. Die parallel zueinander liegenden Lichtstrahlen 36 durchdringen auch die innere Lichtscheibe 40 im Bereich neben den Reflektoren 27, 41, 43 und 45.

Diese Reflektoren 27, 31, 43, 45 können lichtdurchlässig ausgebildet sein. Dann tritt das an den Reflektoren 7, 8 reflektierte Licht auch durch diese Reflektoren hindurch, so dass die gesamte Sichtseite der Leuchte 1 homogen beleuchtet wird. Erst wenn das entsprechende Leuchtmittel 42 eingeschaltet wird, treten die einzelnen Leuchtfelder 11, 12, 13, 14, 15, 16 optisch hervor und werden von außen hinsichtlich ihrer jeweiligen Signalfunktion deutlich erkannt.

Auch die Rückstrahler 23 im unteren Randbereich der Leuchte 1 können lichtdurchlässig ausgebildet sein, so dass das an den Reflektoren 7, 8 reflektierte Licht in diesem Bereich nach außen tritt. Wie Fig. 2 zeigt, sind die Rückstrahler 23 vorteilhaft an der Innenseite der inneren Lichtscheibe 40 vorgesehen. Die Rückstrahler 23 können auch an der Innenseite der äußeren Lichtscheibe 10 vorhanden sein.

Die Lichtleiter 19, 21 sind entsprechend der Krümmung des Leuchtengehäuses 2 bzw. seiner Wandung gebogen und auf den Platinen 34, 35 befestigt, die dieser Krümmung ebenfalls folgen. Die Reflektoren 7, 8 sind entsprechend den geforderten optischen Reflektionsgeometrien ausgebildet. Da die Reflektoren 7, 8 vorteilhaft durch Wandungsteile des Gehäuses 6 gebildet sind, wird Bauraum und Gewicht der Leuchte eingespart und die Zahl der zu montierenden Teile gering gehalten. Die Platinen 34, 35 liegen quer, vorzugsweise senkrecht zum benachbarten Wandungsabschnitt des Gehäuses 6.

Zur Montage ist das Leuchtengehäuse 6 an seiner Rückseite mit einer Öffnung 33 versehen, die bei montierter Leuchte vorteilhaft durch einen Verschluss geschlossen ist. Durch diesen Verschluss können die Versorgungsleitungen für die mit Strom/Spannung zu versorgenden Bauteile in die Leuchte 1 geführt werden. Die Lichtleiter 19, 21 mit den Leuchtmitteln 18 und den Platinen 34, 35 liegen vorteilhaft in unmittelbarer Nähe der Öffnung 33, so dass diese Teile einfach montiert und bei Bedarf auch demontiert werden können.

Der innere Leuchtenteil 3 ist ähnlich ausgebildet wie der beschriebene äußere Leuchtenteil 2. Unterhalb der äußeren Lichtscheibe 10 befindet sich die innere Lichtscheibe 40, die im Querschnitt ähnlich gestuft ausgebildet ist wie im Leuchtenteil 2. Die durch die Stufung gebildeten vorstehenden Teile der inneren Lichtscheibe 40 bilden die Leuchtfelder 17, 28, 29, 22 des inneren Leuchtenteiles 3. Jedem Leuchtfeld 17, 28, 29, 22 ist wiederum wenigstens ein Reflektor zugeordnet, in dessen Brennpunkt sich wenigstens ein Leuchtmittel, vorzugsweise eine LED, befindet. In Höhe der mittleren Leuchtfelder 28, 29 sind die beiden stabförmigen Lichtleiter 20, 26 vorgesehen, die im Bereich zwischen den den Leuchtfeldern 17, 28, 29, 22 zugeordneten Reflektoren und der Rückwand des Gehäuses 2 angeordnet sind. Die Lichtleiter 20, 26 sind wiederum auf Platinen befestigt, die quer, vorteilhaft senkrecht zum benachbarten Wandabschnitt des Gehäuses 6 liegen. In das dem äußeren Leuchtenteil 3 zugewandte Ende der Lichtleiter 20, 26 wird mittels jeweils wenigstens eines Leuchtmittels 18, vorzugsweise eine LED, Licht eingekoppelt. Wie die Lichtleiter 19, 21 sind auch die Lichtleiter 20, 26 so ausgebildet, dass sie das Licht über ihre Länge verteilt so auskoppeln, dass das Licht auf die rückseitigen, dem Gehäuse 6 zugeordneten Reflektoren treffen, an denen die Lichtstrahlen nach vorn zur Lichtscheibe 10 reflektiert werden. Hierbei durchdringen die reflektierten Strahlen auch die inner Lichtscheibe 40. Wie beim Leuchtenteil 2 können auch beim Leuchtenteil 3 die den Leuchtfeldern 17, 28, 29, 22 zugeordneten Reflektoren lichtdurchlässig ausgebildet sein, so dass das von den Lichtleitern 20, 26 ausgekoppelte Licht mittels der entsprechenden Reflektoren auch durch die leuchtfeldseitigen Reflektoren hindurchtritt.

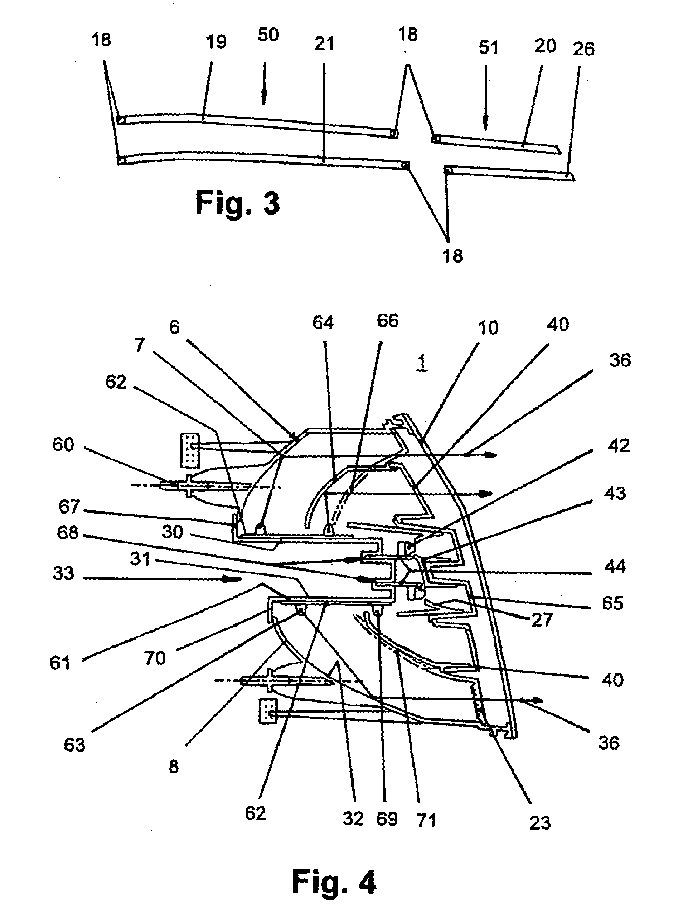

Fig. 3 zeigt die Lichtleiter 19, 21, 20, 26, die jeweils stabförmig ausgebildet sind. Entsprechend der Breite der Leuchtenteile 2, 3 sind die Lichtleiter 19, 21 länger als die Lichtleiter 20, 26. In die Lichtleiter 19, 21 wird von beiden Enden aus mittels der Leuchtmittel 18 Licht eingekoppelt, während bei den Lichtleitern 20, 26 die Lichteinkoppelung mittels der Leuchtmittel 18 nur an einem Ende vorgesehen ist. Die Anordnung und Krümmung der Lichtleiter 19, 21; 20, 26 entspricht der Leuchtengeometrie.

Die Lichtleiter 19, 21 bilden eine Lichtleiste 50 und die Lichtleiter 20, 26 eine Lichtleiste 51. Mit diesen beiden Lichtleisten 50, 51 wird die Lichtscheibe 10 der beiden Leuchtenteile 2, 3 zumindest im Bereich außerhalb der Leuchtfelder gleichmäßig beleuchtet. Sind die den Leuchtfeldern zugeordneten Reflektoren lichtdurchlässig, dann wird die gesamte Sichtfläche der Leuchte 1 gleichmäßig beleuchtet. Der technische Aufwand hierfür ist gering, da lediglich die Lichtleiter und wenigstens ein zugehöriges Leuchtmittel vorzusehen sind. Die Lichtleiter lassen sich einfach in der erforderlichen Form fertigen und montieren. Dabei nehmen die Lichtleiter mit den Leuchtmitteln nur wenig Raum in Anspruch, so dass auch sehr flache Leuchten in der beschriebenen Weise ausgebildet sein können.

Bei der Ausführungsform nach Fig. 4 ist in der Leuchte 1 ein Leuchtmittelträger 61 untergebracht. Bei Verwendung des Leuchtmittelträgers 61 ist es von Vorteil, wenn sich die rückseitige Öffnung 33 im Leuchtengehäuse 6 über die Leuchtenbreite erstreckt. Der Leuchtmittelträger 61 hat im Wesentlichen U-förmigen Querschnitt mit parallel zueinander liegenden Schenkeln 30, 31, deren freie Enden zur Bildung von Halteflanschen 67, 70 entgegengesetzt zueinander rechtwinklig abgewinkelt sind. In montierter Lage liegen die Halteflansche 67, 70, gegebenenfalls unter Zwischenlage einer Dichtung, am Rand der Öffnung 33 an.

Die Stirnseite des Leuchtmittelträgers 61 ist derart geformt, dass zwei schlitzförmige Aufnahmen 68 für Platinen 44 gebildet werden. Die Aufnahmen 68 erstrecken sich parallel zu den Schenkeln 30, 31 des Leuchtmittelträgers 61. In den Aufnahmen 68 sind die Platinen 44 sicher gehalten. Die Länge und Breite der Aufnahmen 68 entspricht der Dicke und Länge der Platinen 44. Sie können beispielsweise mit (nicht dargestellten) Steckkontakten versehen sein, die mit Kontaktaufnahmen des Leuchtmittelträgers 61 zusammenwirken. Auf diese Weise ist eine einfache Kontaktierung der Platinen 44 und der darauf befestigten Leuchtmittel 42 möglich, die vorteilhaft LEDs sind. Wie Fig. 4 zeigt, sind die LEDs 42 so auf den Platinen 44 befestigt, dass sie ihr Licht parallel zur Flachseite der Platinen 44 abstrahlen.

Auf den voneinander abgewandten Außenseiten der Schenkel 30, 31 des Leuchtmittelträgers 61 sind großflächige Platinen 62 befestigt, auf denen Leuchtmittel 63, 69 sitzen, die vorteilhaft LEDs sind. Die Leuchtmittel 63 liegen benachbart zu den Halteflanschen 67, 70 und wirken mit den gehäuseseitigen Reflektoren 7, 8 zusammen. Sie reflektieren das von den Leuchtmitteln 63 abgestrahlte Licht durch die innere Lichtscheibe 40 und die äußere Lichtscheibe 10, wie anhand von Fig. 2 erläutert worden ist.

Den weiter entfernt von den Halteflanschen 67, 70 angeordneten Leuchtmitteln 69 sind Reflektoren 64, 66, 71 zugeordnet, mit denen das von den Leuchtmitteln 69 abgestrahlte Licht zu den jeweiligen Leuchtfeldern reflektiert wird.

Wie bei der vorigen Ausführungsform werden die Leuchtfelder durch entsprechende Profilierungen der inneren Lichtscheibe 40 gebildet. Den beiden mittleren Lichtfeldern ist jeweils der Reflektor 27, 43 zugeordnet, in deren Brennpunkt jeweils wenigstens ein Leuchtmittel 42 sitzt. Das von ihm abgestrahlte Licht wird, wie anhand von Fig. 2 erläutert worden ist, über den jeweiligen Reflektor 27, 43 dem zugehörigen Leuchtfeld zugeführt.

Die Reflektoren 64, 66, 71 können aus lichtdurchlässigem Material bestehen, so dass das von den Reflektoren 7, 8 reflektierte Licht auch im Bereich dieser Reflektoren zur inneren Lichtscheibe 40 und von dort zur äußeren Lichtscheibe 10 gelangt.

Die Verwendung des im Querschnitt im Wesentlichen U-förmigen Leuchtmittelträgers 61 ermöglicht eine einfache Bestückung der Leuchte 1 mit den verschiedenen Leuchtmitteln sowie eine einfache und schnell Positionierung relativ zu den Reflektoren. Die Einzelteile der Leuchte 1 lassen sich einfach montieren, beispielsweise über Verrastung oder Verklipsungen. Auch können die Bauteile der Leuchte 1 miteinander verklebt oder verschweißt werden. Am Leuchtmittelträger 61 können die Platinen 62 mit den Leuchtmitteln 63, 69 sowie die Platinen 44 mit den Leuchtmitteln 42 vormontiert werden. Diese vormontierte Baueinheit kann durch die Öffnung 33 des Leuchtengehäuses 6 gesteckt und am Leuchtengehäuse befestigt werden. Die großflächige Anbindung der Platinen 44, 62 am Leuchtmittelträger 61 ist von Vorteil, da sich dadurch die Leuchtmittel 42, 63, 69 in einfacher Weise genau montieren lassen. Durch den großflächigen Kontakt zwischen den Platinen und dem Leuchtmittelträger 61 ergibt sich auch eine hervorragende Wärmeableitung, so dass die bei längerem Betrieb der Leuchtmittel auftretende Wärme zuverlässig abgeleitet werden kann. In dem von den Schenkeln 30, 31 und der Stirnseite umschlossenen Raum des Leuchtmittelträgers 61 können beispielsweise auch Kühlvorrichtungen, wie Kühlelemente, Gebläse und dergleichen, untergebracht werden, mit denen eine zusätzliche Kühlung erreicht werden kann.

Von der Rückseite des Leuchtengehäuses 6 stehen Befestigungselemente 60 ab, mit denen die Leuchte in bekannter Weise am Fahrzeug befestigt werden kann.

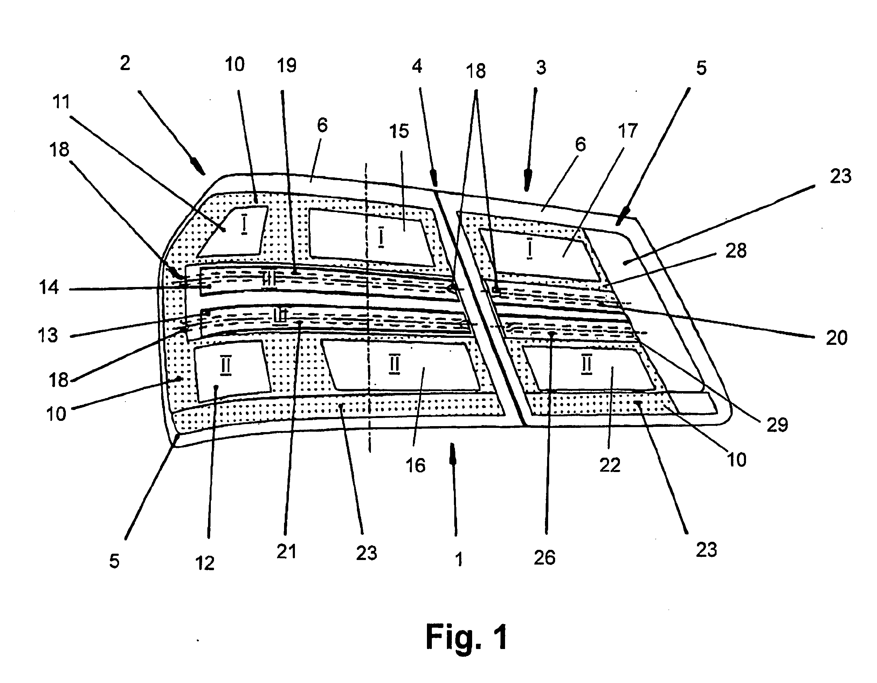

Im Übrigen ist die Leuchte 1 gemäß Fig. 4 gleich ausgebildet wie die Ausführungsform nach den Fig. 1 bis 3.

## Patentansprüche

1. Leuchte (1) für Fahrzeuge, insbesondere für Kraftfahrzeuge, mit einem Leuchtengehäuse (6), das wenigstens ein Leuchtfeld (11, 12, 13, 14, 15, 16, 17, 22) dem wenigstens ein Reflektor (27, 41, 43, 45; 27, 43, 64, 66, 71) mit mindestens einem Leuchtmittel (42) zugeordnet ist, und eine Lichtscheibe (10) aufweist, die das Leuchtengehäuse (6) schließt, wobei an der von der Lichtscheibe (10) abgewandten Seite des Reflektors (27, 41, 43, 45; 27, 43, 64, 66, 71) wenigstens ein weiterer Reflektor (7, 8) vorgesehen ist, der Licht wenigstens eines weiteren Leuchtmittels (18, 19, 20, 21, 26; 63) am anderen Reflektor (27, 41, 43, 45; 27, 43, 64, 66, 71) vorbei zur Lichtscheibe (10) reflektiert,
**dadurch gekennzeichnet, dass** das weitere Leuchtmittel (18, 19, 20, 21, 26) wenigstens einen Lichtleiter (19, 20, 21, 26) aufweist, der der Kontur des weiteren Reflektors (7, 8) angepasst ist und auf einer Platine (34, 35) sitzt, die zumindest annähernd der Kontur des weiteren Reflektors (7, 8) folgt.

2. Leuchte nach Anspruch 1,
**dadurch gekennzeichnet, dass** das vom weiteren Leuchtmittel (18, 19, 20, 21, 26; 63) über den weiteren Reflektor (7, 8) abgestrahlte Licht eine indirekte Hintergrundbeleuchtung der Leuchte (1) ist.

3. Leuchte nach Anspruch 1 oder 2,
**dadurch gekennzeichnet, dass** der weitere Reflektor (7, 8) Teil des Leuchtengehäuses (6) ist und vorteilhaft auf seiner der Lichtscheibe (10) zugewandten Seite eine reflektierende Beschichtung (32) aufweist.

4. Leuchte nach Anspruch 1,
**dadurch gekennzeichnet, dass** der Lichtleiter (19, 20, 21, 26) zur Lichtabstrahlung auf den weiteren Reflektor (7, 8) eine der Krümmung dieses Reflektors angepasste Auskoppeloptik aufweist.

5. Leuchte nach einem der Ansprüche 1 bis 4;
**dadurch gekennzeichnet, dass** zwischen dem Reflektor (27, 41, 43, 45; 27, 43, 64, 66, 71) und der Lichtscheibe (10) wenigstens eine innere Lichtscheibe (40) liegt, die vorteilhaft der äußeren Lichtscheibe (10) mit Abstand gegenüberliegt und vorzugsweise mit Rückstrahlern (23) versehen ist, die im Strahlweg (36) der am weiteren Reflektor (7, 8) reflektierten Lichtstrahlen liegt, die den Rückstrahler (23) von der Rückseite durchleuchten.

6. Leuchte nach einem der Ansprüche 1 bis 5,
**dadurch gekennzeichnet, dass** die Reflektoren (27, 41, 43, 45; 27, 43, 64, 76, 71) für die vom weiteren Reflektor (7, 8) reflektierten Lichtstrahlen (36) durchlässig sind.

## Claims

1. A lamp (1) for vehicles, in particular for motor vehicles, comprising a lamp housing (6) which comprises at least one luminous field (11, 12, 13, 14, 15, 16, 17, 22) to which at least one reflector (27, 41, 43, 45; 27, 43, 64, 66, 71) comprising at least one illuminating means (42) is associated, and a lens (10) which seals the lamp housing (6), at least one further reflector (7, 8) being provided on the side of the reflector (27, 41, 43, 45; 27, 43, 64, 66, 71) remote from the lens (10), said further reflector reflecting light of at least one further illuminating means (18, 19, 20, 21, 26; 63) past the other reflector (27, 41, 43, 45; 27, 43, 64, 66, 71) towards the lens (10), **characterised in that** the further illuminating means (18, 19, 20, 21, 26) comprises at least one light guide (19, 20, 21, 26) which is adapted to the contour of the further reflector (7, 8) and is located on a printed circuit board (34, 35) which at least approximately follows the contour of the further reflector (7, 8).

2. The lamp according to Claim 1, **characterised in that** the light radiated from the further illuminating means (18, 19, 20, 21, 26; 63) via the further reflector (7, 8) is indirect background illumination of the lamp (1).

3. The lamp according to Claim 1 or 2, **characterised in that** the further reflector (7, 8) is part of the lamp housing (6) and advantageously comprises a reflective coating (32) on its side facing the lens (10).

4. The lamp according to Claim 1, **characterised in that** the light guide (19, 20, 21, 26) for light radiation onto the further reflector (7, 8) has output optics adapted to the curvature of this reflector.

5. The lamp according to one of Claims 1 to 4, **characterised in that** between the reflector (27, 41, 43, 45; 27, 43, 64, 66, 71) and the lens (10) at least one inner lens (40) is located, which advantageously opposes the outer lens (10) at a distance and is preferably provided with rear reflectors (23), and which is located in the beam path (36) of the light beams reflected on the further reflector (7, 8) which shine through the rear reflector (23) from the rear face.

6. The lamp according to one of Claims 1 to 5, **characterised in that** the reflectors (27, 41, 43, 45; 27, 43, 64, 76, 71) are permeable to the light beams (36) reflected by the further reflector (7, 8).

## Revendications

1. Lampe (1) pour véhicules, en particulier pour véhicules automobiles, comprenant un boîtier de lampe (6), qui présente au moins un champ lumineux (11, 12, 13, 14, 15, 16, 17, 22), auquel est attribué au moins un réflecteur (27, 41, 43, 45 ; 27, 43, 64, 66, 71) avec au moins un moyen d'éclairage (42), et un diffuseur (10), qui ferme le boîtier de lampe (6), au moins un autre réflecteur (7, 8) étant prévu sur le côté, opposé au diffuseur (10), du réflecteur (27, 41, 43, 45 ; 27, 43, 64, 66, 71), qui réfléchit de la lumière d'au moins un autre moyen d'éclairage (18, 19, 20, 21, 26 ; 63) en passant devant l'autre réflecteur (27, 41, 43, 45 ; 27, 43, 64, 66, 71) vers le diffuseur (10),
**caractérisée en ce que** l'autre moyen d'éclairage (18, 19, 20, 21, 26) présente au moins un guide de lumière (19, 20, 21, 26), qui est adapté au contour de l'autre réflecteur (7, 8) et repose sur une platine (34, 35), laquelle suit au moins approximativement le contour de l'autre réflecteur (7, 8).

2. Lampe selon la revendication 1, **caractérisée en ce que** la lumière diffusée par l'autre moyen d'éclairage (18, 19, 20, 21, 26 ; 63) par l'intermédiaire de l'autre réflecteur (7, 8) est un éclairage de fond indirect de la lampe (1).

3. Lampe selon la revendication 1 ou 2, **caractérisée en ce que** l'autre réflecteur (7, 8) fait partie du boîtier de lampe (6) et présente de façon avantageuse un revêtement (32) réfléchissant sur son côté tourné vers le diffuseur (10).

4. Lampe selon la revendication 1, **caractérisée en ce que** le guide de lumière (19, 20, 21, 26) pour l'émission de lumière sur l'autre réflecteur (7, 8) présente une optique de découplage adaptée à la courbure de ce réflecteur.

5. Lampe selon l'une quelconque des revendications 1 à 4, **caractérisée en ce qu'**entre le réflecteur (27, 41, 43, 45 ; 27, 43, 64, 66, 71) et le diffuseur (10) est disposé au moins un diffuseur (40) interne, qui fait face à distance avantageusement au diffuseur (10) externe et est doté de préférence de catadioptres (23), qui se situe dans la trajectoire du faisceau (36) des rayons lumineux réfléchis sur l'autre réflecteur (7, 8), lesquels éclairent le catadioptre (23) par l'arrière.

6. Lampe selon l'une quelconque des revendications 1 à 5, **caractérisée en ce que** les réflecteurs (27, 41, 43, 45 ; 27, 43, 64, 76, 71) sont perméables pour les rayons lumineux (36) réfléchis par l'autre réflecteur (7, 8).
